# EUROPEAN PATENT SPECIFICATION

(11) **EP 3 998 133 B1**
(45) Date of publication and mention of the grant of the patent: **21.02.2024**
(21) Application number: 21213874.7
(22) Date of filing: 26.10.2017
(51) Int. Cl.: B23D 57/00, B28D 5/04

(54) **WIRE SAW**
DRAHTSÄGE
SCIE À FIL

(43) Date of publication of application: 18.05.2022
(62) Divisional of application: 17198711.8
(73) Proprietor: Precision Surfacing Solutions GmbH, 3645 Gwatt (Thun) (CH)
(72) Inventor: BAECHLER, Alex, 1648 Hauteville (CH); FRECH, Gregor, 3012 Bern (CH); WENGER, Markus, 3752 Wimmis (CH)
(74) Representative: PPR AG

(56) References cited:
- EP-A1- 2 586 554
- EP-A1- 2 650 070
- WO-A1-2018/087619

## Description

The invention relates to a wire saw according to the preamble of claim 1.

JPH07153724A discloses a wire saw for slicing silicon ingots. The wire saw comprises wire guide rollers supporting a wire web and spools for supplying cutting wire to the wire web and for taking-up cutting wire from the wire web. A housing cassette is provided with grooves for accommodating the silicon wafers

WO2013018556A1 discloses a wire saw comprising wire guide rollers across which the cutting wire is suspended in multiple loops. Bobbins are provided on the supply side and winding side of the wire web. Sensors are provided to measure the tension of cutting wire between the wire guide rollers and the bobbins.

Disadvantages in prior art occur due to the fact that the cutting area (comprising the wire guide rollers and the wire web) is not sufficiently separated from the area in which the pulleys and/or spools for (temporarily) storing cutting wire are arranged. Cutting liquid, dirt and material particles have an adverse impact on spools, and the wire thereon, deflection pulleys and tension means. Cleaning and maintenance of wire saws are time wasting and expensive procedures. Moreover, damages at the force measuring system and the pulley bearing may occur.

EP2650070A1 discloses a wire saw according to the preamble of claim 1, and comprising wire guide rollers for spinning a wire web, a storage spool for unused wire on one side, and a storage spool for used wire on the other side of the wire web.

The storage spools are arranged in lateral housings.

The disadvantage of such a solution consists in the fact, that the accessibility of parts from outside the wire saw is very poor, and in a space-wasting design.

The object of the invention is to overcome the problems mentioned above and to provide a wire saw in which cutting wire that is not part of the cutting field as well as pulleys and/or spools for guiding and/or storing the cutting wire are efficiently protected from the adverse effects of cutting liquid, dirt and material particles. Further, the wire saw should have a space saving design and allow for optimal accessibility to the wire saw, particularly to the cutting wire path extending between the wire web (i.e. cutting field) and a storage spool.

The object is achieved by means of a wire saw for cutting a piece of material, particularly for slicing, squaring and/or bricking a piece of semiconductor material and/or for cutting a plurality of wafers from a workpiece, comprising:
a first compartment in which wire guide rollers for supporting a cutting field formed from a cutting wire are arranged, wherein the wire saw further comprises a second compartment in which a first cutting wire spool for storing, at least temporarily, cutting wire in multiple loops is arranged,
a first cutting wire path extending from one of the wire guide rollers to the first cutting wire spool, wherein the first cutting wire path comprises at least one rotatable deflection pulley for deflecting the cutting wire.

According to the invention, the rotational axis of the at least one deflection pulley extends transverse, preferably perpendicular, to the rotational axis of the cutting wire spool and/or to the rotational axes of the wire guide rollers, and that at least one of the wire guiding rollers and/or the first cutting wire spool is/are at least partially formed from metal, preferably steel, and/or from a polymer, preferably reinforced polymer, wherein the second compartment is arranged at least partially below, preferably directly below, the first compartment
and/or wherein the first cutting wire spool is arranged below, preferably in vertical direction below the first compartment
and/or wherein the first cutting wire spool is at least partially, preferably completely arranged below, preferably in vertical direction below, the cutting field.

Such an arrangement allows for a space-saving design with effectively reduced stand space.
"directly below" means "in vertical direction below", i.e. that the second compartment is arranged in vertical direction below the first compartment.

In a preferred embodiment the wire saw comprises
a third compartment in which a second cutting wire spool for storing, at least temporarily, cutting wire in multiple loops is arranged,
a second cutting wire path extending from one of the wire guide rollers to the second cutting wire spool,
wherein the third compartment is arranged at least partially below, preferably directly below, the first compartment,
and/or wherein the second cutting wire spool is arranged below, preferably in vertical direction below the first compartment.

In an alternative the first and/or second cutting wire spool may be at least partially, preferably completely arranged below, preferably in vertical direction below, the cutting field.

In the following embodiments will be described by means of the second compartment, first cutting wire spool, first cutting wire path, first opening, etc. However, in alternative embodiments the same features may be transferred to the third compartment, second cutting wire spool, second cutting wire path, second opening.

Preferably, the first cutting wire spool and/or the second cutting wire spool is/are arranged in vertical direction below the first compartment.

Preferably, the first cutting wire spool and/or the second cutting wire spool is/are arranged in vertical direction below the cutting field.

Preferably, the first cutting wire spool and/or the second cutting wire spool completely overlap with the cutting field (in vertical direction).

Preferably, the bottom wall of the first compartment forms the ceiling of the second compartment and/or the ceiling of the third compartment. The bottom wall may be part of or mounted to the (load carrying) frame of the wire saw.

Preferably, the second compartment and the third compartment are arranged side by side and separated from each other by a, preferably vertical, partition wall, wherein preferably the partition wall extends below, preferably centrally below, the first compartment.

Preferably, the first cutting wire spool is rotatably mounted to a first side of the partition wall, preferably by means of at least one screw, and the second cutting wire spool is rotatably mounted to a second side of the partition wall, preferably by means of at least one screw, which second side is opposite to the first side.

Preferably, the wire saw comprises a frame supporting the wire guide rollers, wherein the partition wall forms a load carrying portion of the frame. Here, the partition wall is used for two functions: carrying load, particularly load of the wire guide rollers; and separating the second compartment from the third compartments. Overall weight of the wire saw may be reduced efficiently.

Preferably, the partition wall has at least one foot, which is arranged vertically below the first compartment. The foot effectively and symmetrically transfers forces into the ground.

In preferred embodiments
the first cutting wire spool has or is connected to a first drive, preferably a motor, wherein preferably the first drive is arranged in the second compartment,
and/or the second cutting wire spool has or is connected to a second drive, preferably a motor, wherein preferably the second drive is arranged in the third compartment.

Preferably, the wire saw comprises a cutting wire forming the cutting field and extending along the first cutting wire path, wherein preferably the cutting wire is a fixed abrasive wire, more preferred a diamond wire.

Preferably, the weight of the wire saw amounts to at least 4000 kg, preferably to at least 5500 kg.

Preferably, the weight carried by the foot (of the partition wall), which is arranged vertically below the first compartment, amounts to at least 1800 kg, preferably to at least 2200 kg.

Preferably, the diameter of at least one of the wire guide rollers amounts to at least 12 cm, preferably to at least 15 cm.

Preferably, the wire receiving surface of at least one of the wire guide rollers is formed from a plurality of wire guiding grooves.

Preferably, at least one of the wire guiding rollers is rotatably mounted to the frame of the wire saw by means of at least one ball bearing and/or at least one roller bearing.

Preferably, the second cutting wire spool is at least partially formed from metal, preferably steel, and/or from polymer, preferably reinforced polymer.

Preferably, a horizontal cross-section of the wire saw's frame is T-shaped. The middle leg of the T-shape is formed by the partition wall. Here, a stable construction is achieved.

Preferably, a horizontal cross-section of the wire saw's frame comprises a T-shaped portion, wherein preferably the T-shaped portion forms at least a part of the partition wall.

Preferably, the partition wall is made from metal, preferably steel, and/or from mineral casting.

Preferably, the thickness of the partition wall amounts to at least 4 cm, preferably at least 7 cm.

Preferably, the partition wall has a hollow profile.

Preferably, the wire saw comprises:
a housing,
wherein at least a portion of the first cutting wire path, preferably the entire first cutting wire path, is accessible, preferably continuously accessible, from outside the wire saw through a first opening formed in the housing of the wire saw.

The second compartment is separated from the first compartment. The cutting wire extends from the first compartment to the second compartment. By the first opening the accessibility is highly increased. The cutting path includes deflection pulleys for deflecting the cutting wire, so that it may be cleaned and maintained easily, as well as its surroundings.

Exchange of the cutting wire becomes uncomplicated and time saving.

The first cutting wire path extends from one of the wire guide rollers to the first cutting wire spool. I.e. the first cutting wire path is defined as a cutting wire path which starts at one of the wire guide rollers and ends at the first cutting wire spool. In the same way the second cutting wire path (see below) is defined as cutting wire path which starts at one of the wire guide rollers and ends at the second cutting wire spool.

In the present application "accessible from outside the wire saw" means: accessible by an operator who stands outside the wire saw. With other words: an operator standing outside the wire saw is able to handle - i.e. clean, remove, exchange and/or maintain - corresponding part(s), i.e. at least parts extending and/or arranged along said portion of the first cutting wire path, preferably the complete wire in the first cutting wire path, particularly the cutting wire itself and/or deflection pulleys and/or a (linear) guide e.g. for guiding a deflection pulley and/or the cutting wire spool. It is preferred if the operator is able to see the complete first cutting wire path from outside the wire saw.

"Continuously accessible from outside the wire saw" means that a continuous access is provided to the cutting wire path without interruptions. The overall cutting wire path is not hidden by any obstacles and/or not guided through holes. Particularly, the cutting wire or an imaginary wire can be drawn from the cutting wire spool to the wire guide rollers, possibly passing pulleys, but without guiding it through holes and preferably without letting it pass behind frame parts from the point of view of the operator (which stands outside the wire saw). Moreover, the end portion of the cutting wire can be held by the operator, e.g. by means of a gripper or by his hand, and brought from the cutting wire spool to the wire guide rollers without letting it go (possibly giving it over to another griper or hand) and thus place it in its position for cutting.

Preferably, said accessible portion of the first cutting wire path is arranged less than 40 cm, preferably less than 30 cm preferably less than 20 cm, behind the opening plane (plane of the housing in which the first opening is formed) and/or behind an openable cover covering the first opening (in the operational state). Here, the operator has to put only his hands and arms into the wire saw.

In a preferred embodiment the wire saw comprises
a third compartment in which a second cutting wire spool for storing, at least temporarily, cutting wire in multiple loops is arranged, and
a second cutting wire path extending from one of the wire guide rollers to the second cutting wire spool,
wherein the second cutting wire path is accessible, preferably continuously accessible, from outside the wire saw through a second opening formed in the housing of the wire saw.
While the one of the second and third compartments accommodates the spool for supplying (unused) cutting wire to the wire web, the other compartment accommodates the spool for receiving (used) cutting wire from the wire web.

Preferably, said accessible portion of the second cutting wire path is arranged less than 40 cm, preferably less than 30 cm preferably less than 20 cm, behind the opening plane (plane of the housing in which the second opening is formed) and/or behind an openable cover covering the second opening (in the operational state). Here, the operator has to put only his hands and arms into the wire saw.

In the following embodiments will be described by means of the second compartment, first cutting wire spool, first cutting wire path, first opening, etc. However, in alternative embodiments the same features may be transferred to the third compartment, second cutting wire spool, second cutting wire path, second opening.

Preferably, the first opening is formed on a first side of the wire saw and the second opening is formed on a second side of the wire saw, wherein preferably the second side is opposite to the first side and wherein preferably the first side and the second side extend along, preferably essentially parallel to, the rotational axes of the wire guide rollers. While the first and second cutting wire paths are spatially separated from each other, high accessibility and a space-saving design may be achieved.

According to the invention, the first cutting wire path comprises at least one, preferably at least two, more preferred at least three, rotatable deflection pulley(s) for deflecting the cutting wire, wherein the at least one, preferably at least two, more preferred at least three, deflection pulley(s), can be accessible from outside the wire saw through the first opening.

Preferably, the at least one deflection pulley is arranged less than 40 cm, preferably less than 30 cm preferably less than 20 cm, behind the plane of the first opening and/or behind an openable cover covering the first opening.

In such a way the deflection pulleys, which are prone to wear and contamination, may be easily cleaned, exchanged and maintained.

Preferably, a main portion of the first cutting wire path extends between a first deflection pulley, which along the first cutting wire path is closest to one of the wire guide rollers, and a second deflection pulley, which along the first cutting wire path is closest to the first cutting wire spool, and wherein the main portion of the first cutting wire path is accessible, preferably continuously accessible, from outside the wire saw through the first opening.

Preferably, each point of the main portion of the first cutting wire path is arranged less than 40 cm, preferably less than 30 cm preferably less than 20 cm, behind the plane of the first opening and/or behind an openable cover covering the first opening. Preferably, the first cutting wire path comprises a third deflection pulley which along the first cutting wire path is arranged between the first deflection pulley and the second deflection pulley, wherein preferably the third deflection pulley is a tensioning pulley for tensioning the cutting wire.

The rotational axis of the at least one deflection pulley extends transverse, preferably perpendicular, to the rotational axis of the cutting wire spool. In such a way a space saving design may be achieved, since the run of the cutting wire path may be oriented along the rotational axis of the wire guide rollers (spanning the cutting field). Preferably, the at least one deflection pulley, preferably all deflection pulleys, of the first cutting wire path is/are arranged in the second compartment. Here, they are optimally protected from dirt, moisture, and particles emanating from the first compartment (i.e. cutting compartment).

Preferably, at least 25%, preferably at least 50% of the first cutting wire path extends along, preferably essentially parallel to, the rotational axes of the wire guide rollers, preferably at least in one position of deflection pulley(s) (9a, 9b, 9c), preferably of second deflection pulley (9c). This results in a space-saving design, since the dimensions of the wire saw perpendicular to the rotational of the wire guide rollers may be significantly reduced.

Preferably, the first opening is formed on a first side of the wire saw, wherein the first side extends along, preferably parallel to, the rotational axes of the wire guide rollers. This aspect also optimized space-saving design.

Preferably, at least one of the wire guide rollers is accessible, preferably continuously accessible, preferably along its entire length, through the first opening. Here, the first opening gives not only access to the second compartment but also to the first compartment.

Preferably, the first cutting wire spool is accessible, preferably continuously accessible, preferably along its entire length, through the first opening.

Preferably, the first cutting wire spool is accessible, preferably through the first opening, along its entire length from a first side of the wire saw, said first side extending along, preferably essentially parallel to, the rotational axes of the wire guide rollers.

Preferably, an end face of the first cutting wire spool is accessible, preferably through the first opening, from a third side of the wire saw, wherein the third side extends transverse, preferably perpendicular to the rotational axes of the wire guide rollers.

Preferably, the first cutting wire spool is removably mounted to the wire saw wherein the first cutting wire spool may be removed from the wire saw by axial movement only. This facilitates exchange of spools, since only one movement in one direction is necessary.

Preferably, the rotational axis of the first cutting wire spool is essentially parallel to the rotational axes of the wire guide rollers. Here also a space-saving design may be achieved.

Preferably, the housing comprises at least one openable cover which in the closed state covers the first opening at least partially. The cover may be e.g. a slidable cover, a hinged cover (e.g. in form of a door), a flexible cover or a (roller) shutter. Preferably, the wire saw comprises a cutting wire feedthrough for guiding the cutting wire from the first compartment to the second compartment.

The cutting wire feedthrough may be e.g. formed as an opening or a duct, preferably a (straight) tube.

The second compartment which is separated from the first compartment allows to accommodate a portion of the cutting wire, preferably also (deflection and/or tension) pulleys and/or spools for storing cutting wire. The cutting wire coming from the cutting field extends through the feedthrough and runs and/or is (temporarily) stored within the second compartment. The cutting wire feedthrough may protect the cutting wire when passing from the first compartment to the second compartment. The feedthrough may be provided in a (openable) wall separating the second compartment from the first compartment.

Preferably, the wire saw comprises a first openable cover having a first (i.e. closing) edge, preferably in form of a flexible sealing or lip, which in the closed state of the first cover faces or lies against a second, preferably stationary edge, preferably in form of a flexible sealing or lip, and which in the opened state of the first cover is distanced from the second edge, wherein the cutting wire feedthrough extends between the first edge and the second edge. Here, direct access is provided to the corresponding cutting wire portion when opening the first cover. This allows for simple exchange of cutting wire. The flexible sealing or lip prevents cutting liquid, dirt and moisture from entering the second compartment.

Preferably, the housing comprises a first openable cover and a second openable cover, wherein the first cover covers at least partially, preferably mainly, the first compartment and the second cover covers at least partially, preferably mainly, the second compartment. It is preferred if the covers may be opened independently of each other.

Preferably, in the closed state of the covers the first cover and the second cover are adjacent to each other, preferably touch each other.

Further embodiments of the invention are indicated in the figures and in the dependent claims. The list of reference marks forms part of the disclosure. The invention will now be explained in detail by the drawings. In the drawings:
- Fig. 1: shows a wire saw according to the invention,
- Fig. 2: shows a preferred embodiment of an inventive wire saw,
- Fig. 3: shows parts of a wire saw from a top view,
- Fig. 4: shows a side view of a wire saw,
- Fig. 5: the transition area of cutting wire between first and second compartment with openable cover,
- Fig. 6: a view through the opening giving access to the cutting wire path,
- Fig. 7: a wire saw with an operator gripping through the opening.

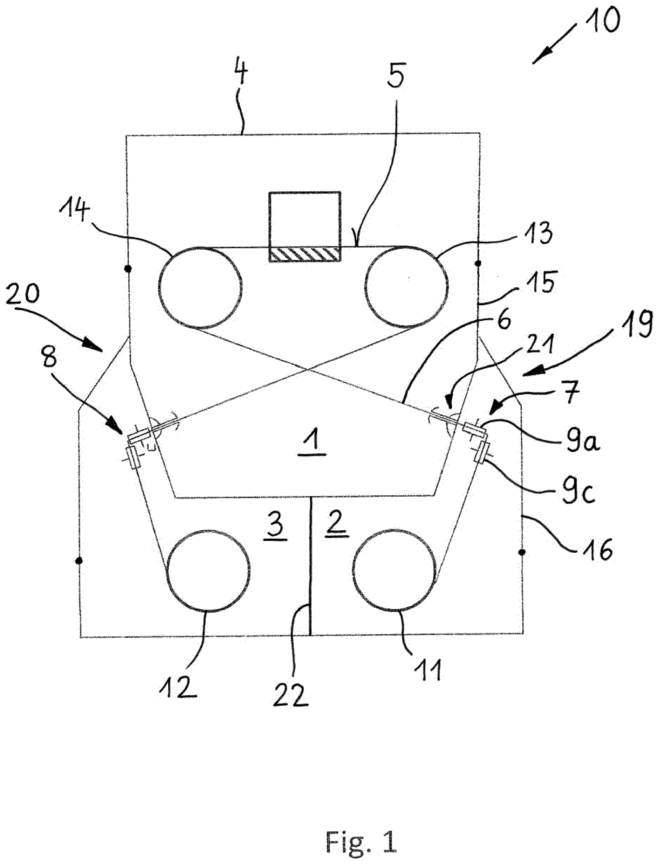

Fig. 1 schematically shows a wire saw 10 for cutting a piece of material (indicated as square in the area of the cutting field 5), particularly for slicing, squaring and/or bricking a piece of semiconductor material and/or for cutting a plurality of wafers from a workpiece. The wire saw 10 comprises a housing 4. In the housing 4 wire guide rollers 13, 14 are arranged within a first compartment 1. Wire guide rollers 13, 14 support a cutting field 5 formed from a cutting wire 6.

The wire saw 10 also comprises a second compartment 2 in which a first cutting wire spool 11 for storing, at least temporarily, cutting wire 6 in multiple loops (also called: storage spool; e.g. for unused wire) is arranged. A first cutting wire path 7 extends from one of the wire guide rollers 13 to the first cutting wire spool 11.

The wire saw 10 also comprises a third compartment 3 in which a second cutting wire spool 12 for storing, at least temporarily, cutting wire 6 in multiple loops (also called: storage spool; e.g. for used wire) is arranged. A second cutting wire path 8 extends from one of the wire guide rollers 14 to the second cutting wire spool 12.

It would be possible to have an additional spool attached to the first and or second cutting wire spool 11 which additional spool may be used for temporarily receiving cutting wire (which is currently in use) in non-overlapping wires.

The rotational axis of the first cutting wire spool 11 and the rotational axis of the second cutting wire spool 12 are essentially parallel to the rotational axes of the wire guide rollers 13, 14.

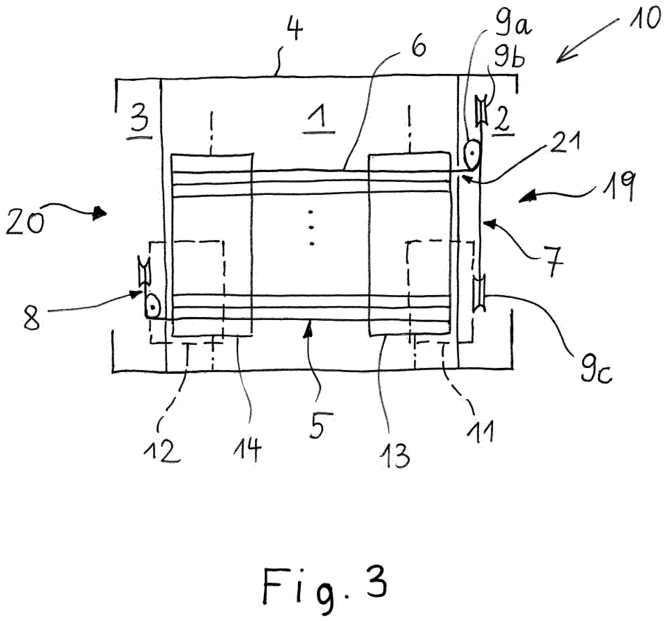

As can be seen from Fig. 1 and 3 at least a portion of the first cutting wire path 7 (here: the entire first cutting wire path 7) is accessible from outside the wire saw 10 through a first opening 19 formed in the housing 4.

In the preferred embodiment of Fig. 3 at least a portion of the second cutting wire path 8 (here: the entire second cutting wire path 8) is accessible through a second opening 20 formed in the housing 4.

As can be seen, the respective cutting wire path is not hidden by any obstacles and/or not guided through holes so that it can be completely accessed through the respective opening 19, 20.

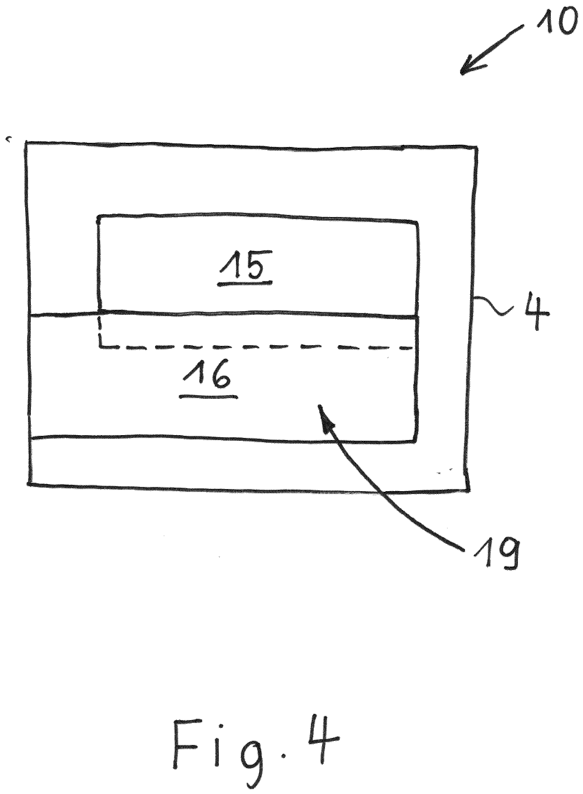

It is preferred if said accessible portion of the second cutting wire path 8 is arranged less than 40 cm, preferably less than 30 cm preferably less than 20 cm, behind the plane of the respective opening 20 and/or behind an openable cover 16 (see Fig. 1 and 4) covering the respective opening 20.

As can be seen particularly from Fig. 3 the first opening 19 is formed on a first side of the wire saw 10 and the second opening 20 is formed on a second side of the wire saw 10. The second side is opposite to the first side. The first side and the second side extend along (here: essentially parallel to) the rotational axes of the wire guide rollers 13, 14.

As can be seen from Fig. 1-3 the first cutting wire path 7 comprises three rotatable deflection pulleys 9a, 9b, 9c for deflecting the cutting wire 6. The deflection pulleys 9a, 9b, 9c are accessible from outside the wire saw 10 through the first opening 19. It is preferred if the deflection pulleys 9a, 9b, 9c are arranged less than 40 cm, preferably less than 30 cm preferably less than 20 cm, behind the plane of the first opening 19 and/or behind an openable cover 16 covering the first opening 19.

A main portion of the first cutting wire path 7 extends between a first deflection pulley 9a, which along the first cutting wire path 7 is closest to one of the wire guide rollers 13, and a second deflection pulley 9c, which along the first cutting wire path 7 is closest to the first cutting wire spool 11. The main portion of the first cutting wire path 7 is accessible from outside the wire saw 10 through the first opening 19.

The first cutting wire path 7 also comprises a third deflection pulley 9b which along the first cutting wire path 7 is arranged between the first deflection pulley 9a and the second deflection pulley 9c. The third deflection pulley 9c is a tensioning pulley (i.e. an adjustable or moveable pulley) for tensioning the cutting wire 6.

The rotational axes of the deflection pulleys 9a, 9b, 9c extend transverse, preferably perpendicular, to the rotational axis of the first cutting wire spool 11 and/or to the rotational axes of the wire guide rollers 13, 14.

As can be seen from Figs. 1-3 all deflection pulleys 9a, 9b, 9c of the first cutting wire path 7 are arranged in the second compartment 2. As can be seen from Fig. 3 at least 50% of the first cutting wire path 7 extends along, preferably essentially parallel to, the rotational axes of the wire guide rollers 13, 14.

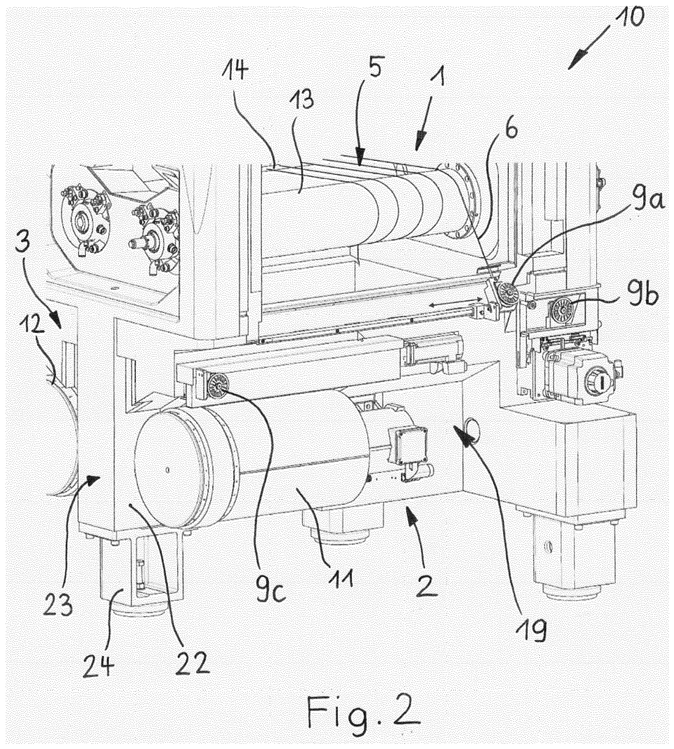

As can be seen from Fig. 2 one of the wire guide rollers 13 is accessible along its entire length through the first opening 19. Also, the first cutting wire spool 11 is accessible along its entire length through the first opening 19.

As can be seen from Fig. 2 the first cutting wire spool 11 is accessible through the first opening 19 not only along its entire length from a first side but also from a third side, wherein the third side extends transverse, preferably perpendicular to the rotational axes of the wire guide rollers 13, 14.

The first cutting wire spool 11 is removably mounted to the wire saw 10. It is preferred if the first cutting wire spool 15 is removable from the wire saw 10 by axial movement only (Fig. 2).

In a preferred aspect of the invention housing 4 comprises at least one openable cover 15, 16 which in the closed state covers the first opening 19 at least partially. The cover(s) are not shown in Fig. 2 and 3, but are apparent from Figs. 1 and 4.

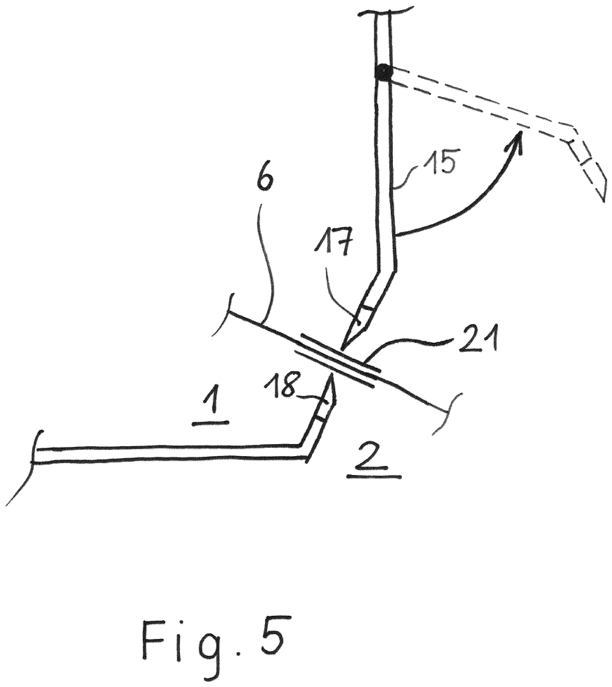

As can be seen from the wire saw 10 comprises at least one cutting wire feedthrough 21 for guiding the cutting wire 6 from the first compartment 1 to the second compartment 2 (or to the third compartment 3). In the embodiment of Fig. 5 the wire saw 10 comprises a first openable cover 15 having a first (closing) edge 17, preferably in form of a flexible sealing or lip, which in the closed state of the first cover 15 faces or lies against a second stationary edge 18, preferably also in form of a flexible sealing or lip. The cutting wire feedthrough 21 - and thus also the cutting wire 6 - extends between the first edge 17 and the second edge 18. In the opened state of the first cover 15 (dashed line in Fig. 5) the first edge 17 is distanced from the second edge 18.

In the embodiments of Fig. 1 and 4 housing 4 comprises a first openable cover 15 and a second openable cover 16, wherein the first cover 15 covers the first compartment 1 and the second cover 16 covers the second compartment 2. In the closed state of the covers 15, 16 the first cover 15 and the second cover 16 may be adjacent to each other, preferably touch each other.

In a preferred aspect of the invention which may be also realized independent of the foregoing embodiments a wire saw 10 comprises:
a first compartment 1 in which wire guide rollers 13, 14 for supporting a cutting field 5 formed from a cutting wire 6 are arranged,
a second compartment 2 in which a first cutting wire spool 11 for storing, at least temporarily, cutting wire 6 in multiple loops is arranged, and
a first cutting wire path 7 extending from one of the wire guide rollers 13, 14 to the first cutting wire spool 11.

The second compartment 2 is arranged below, preferably directly below (i.e. in vertical direction below), the first compartment 1.

It is preferred if also the third compartment 3 is arranged below, preferably directly below, the first compartment 1 (see Fig. 1 and 2). Here, also the first cutting wire spool 11 and the second cutting wire spool 12 are arranged in vertical direction below the first compartment 1. The bottom wall of the first compartment 1 may form the ceiling of the second compartment 2 and/or the ceiling of the third compartment 3.

As can be seen from Fig. 1 and 2 the second compartment 2 and the third compartment 3 are arranged side by side and separated from each other by a, preferably vertical, partition wall 22. The partition wall 22 extends below, preferably centrally below, the first compartment 1.

The first cutting wire spool 11 is rotatably mounted to a first side of the partition wall 22 (e.g. by means of screws) and the second cutting wire spool 12 is rotatably mounted to a second side of the partition wall 22 (e.g. by means of screws), which second side is opposite to the first side.

It is preferred if the partition wall 22 forms a load carrying portion of the frame 23 which also supports the wire guide rollers 13, 14. The partition wall 22 may have at least one foot 24, which is arranged vertically below the first compartment 1.

In the following further preferred embodiments are described:
The first cutting wire spool 11 may have or be connected to a first drive, preferably a motor, wherein preferably the first drive is arranged in the second compartment 2.

The second cutting wire spool 12 may have or be connected to a second drive, preferably a motor, wherein preferably the second drive is arranged in the third compartment 3.

The wire saw 10 may of course (in the operational state) comprise a cutting wire 6 forming the cutting field 5 and extending along the first cutting wire path 7. The cutting wire 6 may be a fixed abrasive wire, preferably a diamond wire.

Preferably, the weight of the wire saw amounts to at least 4000 kg, preferably to at least 5500 kg.

Preferably, the weight carried by the foot (of the partition wall), which is arranged vertically below the first compartment, amounts to at least 1800 kg, preferably to at least 2200 kg.

Preferably, the diameter of at least one of the wire guide rollers amounts to at least 12 cm, preferably to at least 15 cm.

The wire receiving surface of at least one of the wire guide rollers 13, 14 is formed from a plurality of wire guiding groove.

At least one of the wire guiding rollers 13, 14 may be rotatably mounted to the frame 23 of the wire saw 10 by means of at least one ball bearing and/or at least one roller bearing,

At least one of the wire guiding rollers 13, 14 and/or the first cutting wire spool 11 and/or the second cutting wire spool 12 is/are at least partially formed from metal, preferably steel, and/or from a (reinforced) polymer.

As can be seen from Fig. 2 a horizontal cross-section of the wire saw's frame 23 may be T-shaped.

The partition wall 22 may be made from metal, preferably steel, and/or from mineral casting.

The thickness of the partition wall 22 may amount to at least 4 cm, preferably to at least 7 cm.

The partition wall 22 may have a hollow profile.

It is stated that the third compartment including the second cutting wire spool, the second cutting wire path and the second opening may be formed according to individual embodiments described and claimed for the second compartment including the first cutting wire spool, the first cutting wire path and the first opening.

Fig. 4 shows a side view of a wire saw 10 with first cover 15 and second cover 16 closing the first opening 19. The dashed line in Fig. 4 indicates that the second cover 16 may (partially) overlap with the first cover 15.

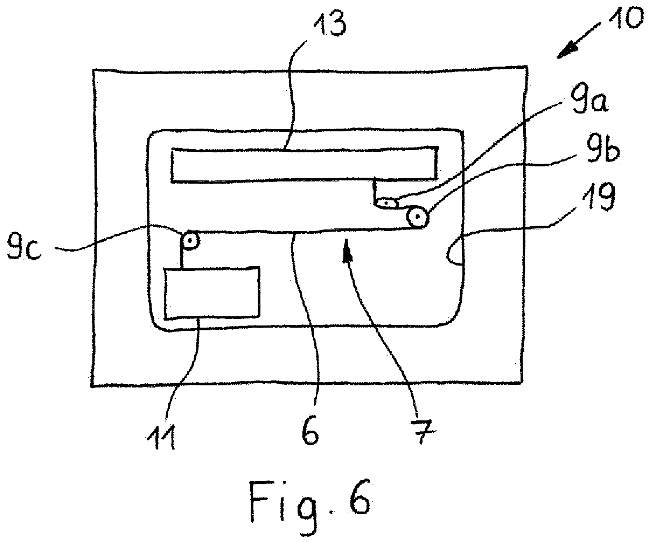

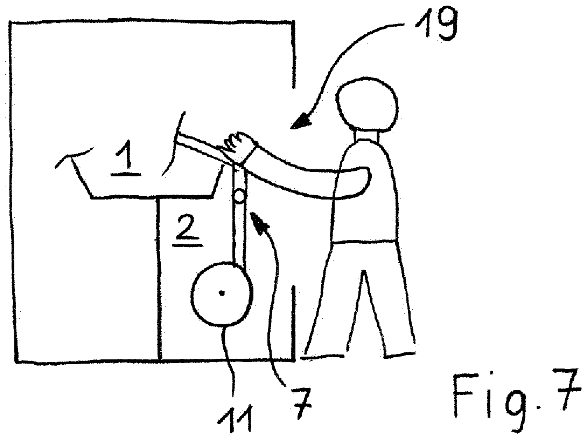

Fig. 6 shows (from outside the wire saw 10) a view through the opening 19 giving access to the cutting wire path 7. The situation for the operator standing outside the wire saw 10 is seen in Fig. 7. As can be seen from these figures the accessibility is increased, since the operator may handle the cutting wire 6 as well as deflection pulleys 9a, 9b, 9c - preferably also the cutting wire spool 11 - from outside the wire saw 10.

The invention is not restricted to the embodiments described above. Other variants will be obvious for the person skilled in the art and are considered to lie within the scope of the invention as defined in the following claims.

### List of reference signs

- 1: first compartment
- 2: second compartment
- 3: third compartment
- 4: housing
- 5: cutting field
- 6: cutting wire
- 7: first cutting wire path
- 8: second cutting wire path
- 9a, 9b, 9c: pulley
- 10: wire saw
- 11: first cutting wire spool
- 12: second cutting wire spool
- 13: wire guide roller
- 14: wire guide roller
- 15: first cover
- 16: second cover
- 17: first (closing) edge
- 18: second (stationary) edge
- 19: first opening
- 20: second opening
- 21: cutting wire feedthrough
- 22: partition wall
- 23: frame
- 24: foot

## Claims

1. Wire saw (10) for cutting a piece of material, particularly for slicing, squaring and/or bricking a piece of semiconductor material and/or for cutting a plurality of wafers from a workpiece, comprising:
- a first compartment (1) in which wire guide rollers (13, 14) for supporting a cutting field (5) formed from a cutting wire (6) are arranged,
wherein the wire saw (10) further comprises:
- a second compartment (2) in which a first cutting wire spool (11) for storing, at least temporarily, cutting wire (6) in multiple loops is arranged,
- a first cutting wire path (7) extending from one of the wire guide rollers (13, 14) to the first cutting wire spool (11), wherein the first cutting wire path (7) comprises at least one rotatable deflection pulley (9a, 9b, 9c) for deflecting the cutting wire (6),
**characterized in that** the rotational axis of the at least one deflection pulley (9a, 9b, 9c) extends transverse, preferably perpendicular, to the rotational axis of the cutting wire spool (11) and/or to the rotational axes of the wire guide rollers (13, 14), and that at least one of thewireguiding rollers (13, 14) and/or the first cutting wire spool (11) is/are at least partially formed from metal, preferably steel, and/or from a polymer, preferably reinforced polymer, wherein the second compartment (2) is arranged at least partially below, preferably directly below, the first compartment (1)
and/or wherein the first cutting wire spool (11) is arranged below, preferably in vertical direction below the first compartment (1)
and/or wherein the first cutting wire spool (11) is at least partially, preferably completely arranged below, preferably in vertical direction below, the cutting field (5).

2. Wire saw according to claim 1, wherein the wire saw (10) comprises
- a third compartment (3) in which a second cutting wire spool (12) for storing, at least temporarily, cutting wire (6) in multiple loops is arranged,
- a second cutting wire path (8) extending from one of the wire guide rollers (14) to the second cutting wire spool (12),
wherein the third compartment (3) is arranged at least partially below, preferably directly below, the first compartment (1)
and/or wherein the second cutting wire spool (12) is arranged below, preferably in vertical direction below the first compartment (1)
and/or wherein the second cutting wire spool (12) is at least partially, preferably completely arranged below, preferably in vertical direction below, the cutting field (5).

3. Wire saw according to claim 1 or 2,
wherein the first cutting wire spool (11) and/or the second cutting wire spool (12) is/are arranged in vertical direction below the first compartment (1) and/or wherein the first cutting wire spool (11) and/or the second cutting wire spool (12) completely overlap with the cutting field (5) in vertical direction.

4. Wire saw according to one of the preceding claims, wherein the bottom wall of the first compartment (1) forms the ceiling of the second compartment (2) and/or the ceiling of the third compartment (3).

5. Wire saw according to one of the preceding claims, wherein the second compartment (2) and the third compartment (3) are arranged side by side and separated from each other by a, preferably vertical, partition wall (22), wherein preferably the partition wall (22) extends below, preferably centrally below, the first compartment (1).

6. Wire saw according to claim 5, wherein the first cutting wire spool (11) is rotatably mounted to a first side of the partition wall (22), preferably by means of at least one screw, and the second cutting wire spool (12) is rotatably mounted to a second side of the partition wall (22), preferably by means of at least one screw, which second side is opposite to the first side.

7. Wire saw according to claim 5 or 6, wherein the wire saw (10) comprises a frame (23) supporting the wire guide rollers (13, 14), wherein the partition wall (22) forms a load carrying portion of the frame (23).

8. Wire saw according to one of the claims 5 to 7, wherein the partition wall (22) has at least one foot (24), which is arranged vertically below the first compartment (1), wherein preferably the weight carried by the foot (24) amounts to at least 1800 kg, preferably to at least 2200 kg.

9. Wire saw according to one of the preceding claims,
wherein the first cutting wire spool (11) has or is connected to a first drive, preferably a motor, wherein preferably the first drive is arranged in the second compartment (2),
and/or wherein the second cutting wire spool (12) has or is connected to a second drive, preferably a motor, wherein preferably the second drive is arranged in the third compartment (3).

10. Wire saw according to one of the preceding claims,
wherein the wire saw (10) comprises a cutting wire (6) forming the cutting field (5) and extending along the first cutting wire path (7), wherein preferably the cutting wire (6) is a fixed abrasive wire, more preferred a diamond wire, and/or wherein the weight of the wire saw (10) amounts to at least 4000 kg, preferably to at least 5500 kg,
and/or wherein the second cutting wire spool (12) is at least partially formed from metal, preferably steel, and/or from a polymer, preferably reinforced polym er.

11. Wire saw according to one of the preceding claims, wherein a horizontal cross-section of the wire saw's frame comprises a T-shaped portion, wherein preferably the T-shaped portion forms at least a part of the partition wall (22).

12. Wire saw according to one of the claims 5 to 11,
wherein the partition wall (22) is made from metal, preferably steel, and/or from mineral casting,
and/or wherein the thickness of the partition wall (22) amounts to at least 4 cm, preferably to at least 7 cm,
and/or wherein the partition wall (22) has a hollow profile.

13. Wire saw according to one of the preceding claims, further comprising:
- a housing (4),
wherein at least a portion of the first cutting wire path (7), preferably the entire first cutting wire path (7), is accessible, preferably continuously accessible, from outside the wire saw (10) through a first opening (19) formed in the housing (4) of the wire saw (10),
wherein preferably said portion of the first cutting wire path (7) is arranged less than 40 cm, preferably less than 30 cm preferably less than 20 cm, behind the plane of the first opening (19) and/or behind an openable cover (15, 16) covering the first opening (19).

14. Wire saw according to one of the preceding claims, wherein the housing (4) of the wire saw (10) comprises a first openable cover (15) and a second openable cover (16), wherein the first cover (15) covers at least partially, preferably mainly, the first compartment (1) and the second cover (16) covers at least partially, preferably mainly, the second compartment (2).

15. Wire saw according to claim 14, wherein in the closed state of the covers (15, 16), the first cover (15) and the second cover (16) are adjacent to each other, preferably touch each other.

## Patentansprüche

1. Drahtsäge (10) zum Zuschneiden eines Stücks Material, insbesondere zum Zuschneiden eines Stücks Halbleitermaterial in Scheiben, Würfel und/oder Quader und/oder zum Zuschneiden mehrerer Wafer aus einem Werkstück, die Folgendes umfasst:
- einen ersten Raum (1), in dem Drahtführungsrollen (13, 14) zum Halten eines von einem Schneiddraht (6) gebildeten Schneidbereichs (5) angeordnet sind,
wobei die Drahtsäge (10) ferner Folgendes umfasst:
- einen zweiten Raum (2), in dem eine erste Schneiddrahtspule (11) zum zumindest vorübergehenden Aufbewahren von Schneiddraht (6) in mehreren Windungen angeordnet ist,
- einen ersten Schneiddrahtweg (7), der von einer der Drahtführungsrollen (13, 14) aus bis zu der ersten Schneiddrahtspule (11) verläuft, wobei der erste Schneiddrahtweg (7) mindestens eine drehbare Umlenkrolle (9a, 9b, 9c) zum Umlenken des Schneiddrahts (6) umfasst,
**dadurch gekennzeichnet, dass** die Rotationsachse der mindestens einen Umlenkrolle (9a, 9b, 9c) quer, vorzugsweise senkrecht, zur Rotationsachse der Schneiddrahtspule (11) und/oder zu den Rotationsachsen der Drahtführungsrollen (13, 14) verläuft und dass die Drahtführungsrollen (13, 14) und/oder die erste Schneiddrahtspule (11) zumindest teilweise aus Metall, vorzugsweise Stahl, und/oder einem Polymer, vorzugsweise verstärktem Polymer, gebildet sind/ist,
wobei der zweite Raum (2) zumindest teilweise unterhalb, vorzugsweise direkt unterhalb des ersten Raums (1) angeordnet ist
und/oder wobei die erste Schneiddrahtspule (11) unterhalb, vorzugsweise in vertikaler Richtung unterhalb des ersten Raums (1) angeordnet ist
und/oder wobei die erste Schneiddrahtspule (11) zumindest teilweise, vorzugsweise vollständig unterhalb, vorzugsweise in vertikaler Richtung unterhalb des Schneidbereichs (5) angeordnet ist.

2. Drahtsäge nach Anspruch 1, wobei die Drahtsäge (10) Folgendes umfasst:
- einen dritten Raum (3), in dem eine zweite Schneiddrahtspule (12) zum zumindest vorübergehenden Aufbewahren von Schneiddraht (6) in mehreren Windungen angeordnet ist,
- einen zweiten Schneiddrahtweg (8), der von einer der Drahtführungsrollen (14) aus bis zu der zweiten Schneiddrahtspule (12) verläuft,
wobei der dritte Raum (3) zumindest teilweise unterhalb, vorzugsweise direkt unterhalb des ersten Raums (1) angeordnet ist
und/oder wobei die zweite Schneiddrahtspule (12) unterhalb, vorzugsweise in vertikaler Richtung unterhalb des ersten Raums (1) angeordnet ist
und/oder wobei die zweite Schneiddrahtspule (12) zumindest teilweise, vorzugsweise vollständig unterhalb, vorzugsweise in vertikaler Richtung unterhalb des Schneidbereichs (5) angeordnet ist.

3. Drahtsäge nach Anspruch 1 oder 2,
wobei die erste Schneiddrahtspule (11) und/oder die zweite Schneiddrahtspule (12) in vertikaler Richtung unterhalb des ersten Raums (1) angeordnet sind/ist
und/oder wobei die erste Schneiddrahtspule (11) und/oder die zweite Schneiddrahtspule (12) den Schneidbereich (5) in vertikaler Richtung vollständig überlappen/überlappt.

4. Drahtsäge nach einem der vorhergehenden Ansprüche, wobei die untere Wand des ersten Raums (1) die Decke des zweiten Raums (2) und/oder des dritten Raums (3) bildet.

5. Drahtsäge nach einem der vorhergehenden Ansprüche, wobei der zweite Raum (2) und der dritte Raum (3) nebeneinander angeordnet und durch eine vorzugsweise vertikale Trennwand (22) voneinander getrennt sind, wobei die Trennwand (22) vorzugsweise unterhalb, vorzugsweise mittig unterhalb des ersten Raums (1) verläuft.

6. Drahtsäge nach Anspruch 5, wobei die erste Schneiddrahtspule (11) vorzugsweise mithilfe mindestens einer Schraube drehbar an einer ersten Seite der Trennwand (22) und die zweite Schneiddrahtspule (12) vorzugsweise mithilfe mindestens einer Schraube drehbar an einer zweiten Seite der Trennwand (22) angebracht ist, wobei die zweite Seite der ersten Seite gegenüberliegt.

7. Drahtsäge nach Anspruch 5 oder 6, wobei die Drahtsäge (10) einen Rahmen (23) umfasst, der die Drahtführungsrollen (13, 14) hält, wobei die Trennwand (22) einen tragenden Teil des Rahmens (23) bildet.

8. Drahtsäge nach einem der Ansprüche 5 bis 7, wobei die Trennwand (22) mindestens einen Fuß (24) aufweist, der vertikal unterhalb des ersten Raums (1) angeordnet ist, wobei das von dem Fuß (24) getragene Gewicht mindestens 1800 kg, vorzugsweise mindestens 2200 kg beträgt.

9. Drahtsäge nach einem der vorhergehenden Ansprüche,
wobei die erste Schneiddrahtspule (11) einen ersten Antrieb, vorzugsweise einen Motor, aufweist oder mit diesem verbunden ist, wobei der erste Antrieb vorzugsweise in dem zweiten Raum (2) angeordnet ist,
und/oder wobei die zweite Schneiddrahtspule (12) einen zweiten Antrieb, vorzugsweise einen Motor, aufweist oder mit diesem verbunden ist, wobei der zweite Antrieb vorzugsweise in dem dritten Raum (3) angeordnet ist.

10. Drahtsäge nach einem der vorhergehenden Ansprüche,
wobei die Drahtsäge (10) einen Schneiddraht (6) umfasst, der den Schneidbereich (5) bildet und den ersten Schneiddrahtweg (7) entlang verläuft, wobei es sich bei dem Schneiddraht (6) vorzugsweise um einen eingespannten Schleifdraht, besonders bevorzugt um einen Diamantdraht handelt,
und/oder wobei das Gewicht der Drahtsäge (10) mindestens 4000 kg, vorzugsweise mindestens 5500 kg beträgt,
und/oder wobei die zweite Schneiddrahtspule (12) zumindest teilweise aus Metall, vorzugsweise Stahl, und/oder aus einem Polymer, vorzugsweise verstärktem Polymer, gebildet ist.

11. Drahtsäge nach einem der vorhergehenden Ansprüche, wobei ein horizontaler Querschnitt durch den Rahmen der Drahtsäge einen T-förmigen Teil umfasst, wobei der T-förmige Teil vorzugsweise zumindest einen Bestandteil der Trennwand (22) bildet.

12. Drahtsäge nach einem der Ansprüche 5 bis 11,
wobei die Trennwand (22) aus Metall, vorzugsweise Stahl, und/oder aus Mineralguss hergestellt ist,
und/oder wobei die Dicke der Trennwand (22) mindestens 4 cm, vorzugsweise mindestens 7 cm beträgt,
und/oder wobei die Trennwand (22) ein Hohlprofil aufweist.

13. Drahtsäge nach einem der vorhergehenden Ansprüche, die ferner Folgendes umfasst:
- ein Gehäuse (4),
wobei zumindest ein Abschnitt des ersten Schneiddrahtwegs (7), vorzugsweise der gesamte erste Schneiddrahtweg (7), über eine in dem Gehäuse (4) der Drahtsäge (10) ausgebildete erste Öffnung (19) von außerhalb der Drahtsäge (10) her zugänglich, vorzugsweise ständig zugänglich ist,
wobei vorzugsweise der Abschnitt des ersten Schneiddrahtwegs (7) weniger als 40 cm, vorzugsweise weniger als 30 cm, vorzugsweise weniger als 20 cm hinter der Ebene der ersten Öffnung (19) und/oder hinter einer die erste Öffnung (19) abdeckenden, öffenbaren Abdeckung (15, 16) angeordnet ist.

14. Drahtsäge nach einem der vorhergehenden Ansprüche, wobei das Gehäuse (4) der Drahtsäge (10) eine erste öffenbare Abdeckung (15) und eine zweite öffenbare Abdeckung (16) umfasst, wobei die erste Abdeckung (15) den ersten Raum (1) und die zweite Abdeckung (16) den zweiten Raum (2) zumindest teilweise, vorzugsweise im Wesentlichen abdeckt.

15. Drahtsäge nach Anspruch 14, wobei die erste Abdeckung (15) und die zweite Abdeckung (16) im geschlossenen Zustand der Abdeckungen (15, 16) aneinander angrenzen und sich vorzugsweise berühren.

## Revendications

1. Scie à fil (10) pour découper un morceau de matériau, en particulier pour découper un morceau de matériau semi-conducteur en tranches, en carrés et/ou en briques, et/ou pour découper une pluralité de wafers à partir d'une pièce, comprenant :
- un premier compartiment (1) où sont agencés des rouleaux de guidage de fil (13, 14) pour supporter un champ de découpe (5) formé par un fil de découpe (6),
dans laquelle la scie à fil (10) comprend en outre :
- un deuxième compartiment (2) où est agencée une première bobine de fil de découpe (11) pour stocker, au moins temporairement, un fil de découpe (6) sur de multiples boucles,
- un premier chemin de fil de découpe (7) qui s'étend depuis l'un des rouleaux de guidage de fil (13, 14) jusqu'à la première bobine de fil de découpe (11), dans laquelle le premier chemin de fil de découpe (7) comprend au moins une poulie de déflexion rotative (9a, 9b, 9c) pour défléchir le fil de découpe (6),
**caractérisée en ce que** l'axe de rotation de ladite au moins une poulie de déflexion (9a, 9b, 9c) s'étend transversalement, de préférence perpendiculairement, à l'axe de rotation de la bobine de fil de découpe (11) et/ou aux axes de rotation des rouleaux de guidage de fil (13, 14), et **en ce qu'**au moins un des rouleaux de guidage de fil (13, 14) et/ou la première bobine de fil de découpe (11) sont au moins partiellement formés en métal, de préférence en acier, et/ou en un polymère, de préférence en un polymère renforcé,
dans laquelle le deuxième compartiment (2) est agencé au moins partiellement en dessous, de préférence directement en dessous, du premier compartiment (1),
et/ou dans laquelle la première bobine de fil de découpe (11) est agencée en dessous, de préférence en direction verticale, du premier compartiment (1),
et/ou dans laquelle la première bobine de fil de découpe (11) est au moins partiellement, de préférence complètement, agencée en dessous, de préférence en direction verticale, du champ de découpe (5).

2. Scie à fil selon la revendication 1, dans laquelle la scie à fil (10) comprend
- un troisième compartiment (3) où est agencée une deuxième bobine de fil de découpe (12) pour stocker, au moins temporairement, le fil de découpe (6) sur de multiple boucles,
- un deuxième chemin de fil de découpe (8) qui s'étend depuis l'un des rouleaux de guidage de fil (14) jusqu'à la deuxième bobine de fil de découpe (12),
dans laquelle le troisième compartiment (3) est agencé au moins partiellement en dessous, de préférence directement en dessous, du premier compartiment (1),
et/ou dans laquelle la deuxième bobine de fil de découpe (12) est agencée en dessous, de préférence en direction verticale, du premier compartiment (1),
et/ou dans laquelle la deuxième bobine de fil de découpe (12) est au moins partiellement, de préférence complètement, agencée en dessous, de préférence en direction verticale, du champ de découpe (5).

3. Scie à fil selon la revendication 1 ou 2,
dans laquelle la première bobine de fil de découpe (11) et/ou la deuxième bobine de fil de découpe (12) sont agencées en direction verticale en dessous du premier compartiment (1)
et/ou dans laquelle la première bobine de fil de découpe (11) et/ou la deuxième bobine de fil de découpe (12) chevauchent complètement le champ de découpe (5) en direction verticale.

4. Scie à fil selon l'une des revendications précédentes, dans laquelle la paroi inférieure du premier compartiment (1) forme le plafond du deuxième compartiment (2) et/ou le plafond du troisième compartiment (3).

5. Scie à fil selon l'une des revendications précédentes, dans laquelle le deuxième compartiment (2) et le troisième compartiment (3) sont agencés côte à côte et séparés l'un de l'autre par une cloison de séparation (22), de préférence verticale, dans laquelle la cloison de séparation (22) s'étend de préférence en dessous, de préférence centralement, du premier compartiment (1).

6. Scie à fil selon la revendication 5, dans laquelle la première bobine de fil de découpe (11) est montée de manière rotative sur un premier côté de la cloison de séparation (22), de préférence par au moins une vis, et la deuxième bobine de fil de découpe (12) est montée de manière rotative sur un deuxième côté de la cloison de séparation (22), de préférence au moyen d'au moins une vis, ledit deuxième côté étant opposé au premier côté.

7. Scie à fil selon la revendication 5 ou 6, dans laquelle la scie à fil (10) comprend un châssis (23) supportant les rouleaux de guidage de fil (13, 14), dans laquelle la cloison de séparation (22) forme une portion porteuse du châssis (23).

8. Scie à fil selon l'une des revendications 5 à 7, dans laquelle la cloison de séparation (22) comporte au moins un pied (24) qui est agencé verticalement en dessous du premier compartiment (1), dans laquelle le poids porté par le pied (24) s'élève de préférence à au moins 1800 kg, de préférence à au moins 2200 kg.

9. Scie à fil selon l'une des revendications précédentes,
dans laquelle la première bobine de fil de découpe (11) comporte ou est connectée à un premier entraînement, qui est de préférence un moteur, dans laquelle le premier entraînement est agencé de préférence dans le deuxième compartiment (2),
et/ou dans laquelle la deuxième bobine de fil de découpe (12) comporte ou est connectée à un deuxième entraînement, qui est de préférence un moteur, dans laquelle le deuxième entraînement est agencé de préférence dans le troisième compartiment (3).

10. Scie à fil selon l'une des revendications précédentes,
dans laquelle la scie à fil (10) comprend un fil de découpe (6) formant le champ de découpe (5) et s'étendant le long du premier chemin de fil de découpe (7), dans laquelle le fil de découpe (6) est de préférence un fil abrasif fixe, de préférence un fil diamanté,
et/ou dans laquelle le poids de la scie à fil (10) s'élève à au moins 4000 kg, de préférence à au moins 5500 kg,
et/ou dans laquelle la deuxième bobine de fil de découpe (12) est au moins partiellement formée en métal, de préférence en acier, et/ou en un polymère, de préférence en un polymère renforcé.

11. Scie à fil selon l'une des revendications précédentes, dans laquelle une section transversale horizontale du châssis de la scie à fil comprend une portion en forme de T, dans laquelle la portion en forme de T forme de préférence au moins une partie de la cloison de séparation (22).

12. Scie à fil selon l'une des revendications 5 à 11,
dans laquelle la cloison de séparation (22) est réalisée en métal, de préférence en acier, et/ou en fonte minérale,
et/ou dans laquelle l'épaisseur de la cloison de séparation (22) s'élève à au moins 4 cm, de préférence à au moins 7 cm,
et/ou dans laquelle la cloison de séparation (22) présente un profil creux.

13. Scie à fil selon l'une des revendications précédentes, comprenant en outre :
- un boîtier (4),
dans laquelle au moins une portion du premier chemin de fil de découpe (7), de préférence la totalité du premier chemin de fil de découpe (7), est accessible, de préférence accessible en continu, depuis l'extérieur de la scie à fil (10) à travers une première ouverture (19) formée dans le boîtier (4) de la scie à fil (10),
dans laquelle de préférence ladite portion du premier chemin de fil de découpe (7) est agencée à moins de 40 cm, de préférence à moins de 30 cm, de préférence à moins de 20 cm derrière le plan de la première ouverture (19) et/ou derrière un couvercle ouvrant (15, 16) recouvrant la première ouverture (19).

14. Scie à fil selon l'une des revendications précédentes, dans laquelle le boîtier (4) de la scie à fil (10) comprend un premier couvercle ouvrant (15) et un deuxième couvercle ouvrant (16), dans laquelle le premier couvercle (15) recouvre au moins partiellement, de préférence principalement, le premier compartiment (1) et le deuxième couvercle (16) recouvre au moins partiellement, de préférence principalement, le deuxième compartiment (2).

15. Scie à fil selon la revendication 14, dans laquelle, dans l'état fermé des couvercles (15, 16), le premier couvercle (15) et le deuxième couvercle (16) sont adjacents l'un à l'autre, et de préférence se touchent.
